# FASCICULE DE BREVET EUROPEEN

(11) **EP 1 325 895 B1**
(45) Date de publication et mention de la délivrance du brevet: **03.11.2010**
(21) Numéro de dépôt: 02293250.3
(22) Date de dépôt: 27.12.2002
(51) Int. Cl.: C03B 37/012

(54) **Procédé pour la recharge de préforme pour fibre optique**
Verfahren zum Stapeln von einer Lichtleitfaservorform
Method for overcladding of an optical fiber preform

(30) Priorité: 03.01.2002 FR 0200046
(43) Date de publication de la demande: 09.07.2003
(73) Titulaire: Draka Comteq B.V., 1083 HJ Amsterdam (NL)
(72) Inventeur: Jolly, Jacques, 78400 Chatou (FR); Herchuelz, Virginie, 78570 Andresy (FR); Fauche, Rémi, 78260 Achères (FR); Tutin, Eric, 95370 Montigny les Cormeilles (FR); Campion, Jean-Florent, 78700 Conflans St-Honorine (FR)
(74) Mandataire: Blokland, Arie

(56) Documents cités:
- FR-A- 2 714 371
- US-A- 5 376 767
- US-A- 5 522 007
- CARRATT M ET AL: "MCVD-PLASMA PROCESS FOR MANUFACTURING SINGLE-MODE OPTICAL FIBERS FOR TERRESTRIAL APPLICATIONS" ELECTRICAL COMMUNICATION, ALCATEL. BRUSSELS, BE, 1994, pages 11-14, XP000445980 ISSN: 0013-4252

## Description

La présente invention se rapporte à un procédé pour le dépôt externe de silice, éventuellement dopée, sur un barreau en présence d'un plasma créé par induction à l'aide d'un générateur haute fréquence. Ce procédé est également appelé procédé de recharge par plasma, cette opération étant traduite par le terme "plasma overcladding" en langue anglaise. Ce procédé sert notamment à la fabrication de préformes destinées à être par la suite transformées par étirage en fibres optiques pour câbles de télécommunications.

La fabrication de fibres optiques à partir de préformes est classique. L'obtention d'une préforme par la technique de la recharge plasma est connue; elle est décrite, par exemple, dans le document EP- 0 450 465. Un procédé connu de fabrication ou de recharge de préformes destinées à la production de fibres optiques prévoit un dépôt de silice sur une préforme primaire qui est munie d'embouts de support à ses extrémités et qui est portée par des moyens lui permettant de se déplacer selon son axe et de tourner par rapport à une flamme d'une torche plasma inductive, dans laquelle des grains de silice d'origine naturelle ou synthétique sont injectés et fondus. Ce procédé permet de réaliser une préforme de diamètre déterminé, à partir d'une préforme primaire de diamètre moindre, par superposition d'une succession de couches de silice concentriquement réalisées.

Le document FR 2 714 371 concerne un procédé de recharge d'une préforme de fibre optique dans lequel on dépose de la silice dopée ou non dopée sur une préforme au moyen d'un dispositif comportant une torche à plasma. Cette torche à plasma comporte en son centre un injecteur axial agencé pour injecter dans un flux gazeux, par une buse, soit des granules de silice, soit un courant gazeux de composés volatils qui réagissent avec l'oxygène pour générer des suies de silice. L'injecteur est entouré d'un tube de gainage qui définit avec lui un canal de gainage principal et qui comporte un circuit de refroidissement à eau. Les canaux de gainage principal et auxiliaire véhiculent un gaz chimiquement neutre tel que l'argon.

L'article Electrical Communication, Alcatel. Brussels, BE 1994, pages 11-14 décrit un procédé de dépôt externe sur un barreau de silice en présence d'un plasma créé par une bobine d'inducation alimentée par un générateur à haute fréquence. Le gaz plasmagène est en particulier de l'air.

Le document FR-2 253 723 décrit un équipement pour la préparation d'une préforme destinée à fournir un guide d'onde optique. En partant d'un tube ou d'un barreau appelé à constituer une région de coeur, on effectue un dépôt interne ou externe d'une seconde composition. Le dépôt est réalisé par déplacement en translation du tube ou barreau devant le dard d'un chalumeau à plasma dont la chambre de projection est alimentée en poudre ultra fine de la seconde composition. Le chalumeau reçoit d'une source un gaz plasmagène, de préférence de l'argon. La poudre fine servant à la formation du dépôt est véhiculée par un gaz porteur, de préférence de l'argon. Un chalumeau à plasma permet une vitesse de sortie de la poudre d'au moins 100m/s.

Le document EP-0 401 742 décrit un procédé de dépôt externe sur un barreau de silice en présence d'un plasma créé par une bobine d'induction alimentée par un générateur à haute fréquence. Un gaz plasmagène tel que de l'oxygène, de l'azote ou de l'argon est introduit dans la torche. Le dépôt s'effectue à l'aide d'une buse d'injection dirigeant vers le barreau un mélange d'oxygène et d'un composé du silicium, et éventuellement de composés dopants.

Le document EP-0 658 520 décrit un procédé de recharge d'une préforme pour fibre optique à l'aide d'une torche à plasma dans laquelle le gaz plasmagène est en particulier de l'air sauf pour l'amorçage de la torche pour lequel l'air est remplacé par un courant d'argon. Des grains de silice naturelle ou synthétique sont injectés dans la flamme de la torche et la silice fondue est projetée sur la préforme primaire en translation devant la flamme.

Le document US-5,861,047 décrit un procédé utilisant une torche plasma isotherme. On utilise par exemple de l'oxygène ou un plasma contenant de l'oxygène comme un mélange oxygène / argon.

Le document EP-0 982 272 décrit un procédé de traitement de surface d'une préforme de fibre optique par un jet de plasma généré par une bobine RF alimentée par un générateur RF. On connaît une large variété de gaz susceptibles d'être utilisés dans une torche à plasma isotherme. Par exemple les gaz contenant au moins de l'oxygène, de l'argon, de l'azote ou de l'hélium avec la possibilité d'y ajouter un autre gaz. La puissance de la torche plasma (c'est à dire du générateur RF) varie de 10 à 100kW selon la fréquence, et notamment de 20 à 60kW à environ 3MHz.

Dans un souci d'amélioration de la productivité du procédé de recharge, on cherche à augmenter la vitesse de recharge et le diamètre des préformes ainsi traitées. L'augmentation de la vitesse de recharge correspond à une augmentation de la quantité de matière fondue par unité de temps de procédé, la difficulté étant de réussir à fondre des quantités importantes de grain. L'accroissement du diamètre des préformes traitées entraîne une augmentation de l'inertie thermique et de la surface à chauffer.

La nature du gaz employé pour générer le plasma contribue à améliorer cette efficacité thermique. Dans l'état de l'art connu, on utilise de préférence dans ce but un gaz diatomique tel que l'oxygène, l'azote ou avantageusement des mélanges de gaz diatomiques tels que l'air, car ce type de gaz possède intrinsèquement un pouvoir thermique supérieur à celui des gaz monoatomiques, grâce à l'énergie de dissociation des molécules gazeuses :
Gaz diatomique : exemple de l'oxygène
   dissociation :O = 2 O° avec la quantité d'énergie associée ΔG_{dissociation} = 494 KJ/mol
   ionisation :O° = O⁺ + e avec la quantité d'énergie associée ΔGᵢₒₙᵢₛₐₜᵢₒₙ = 1308 KJ/mol
Gaz monoatomique : exemple de l'argon
   ionisation :Ar = Ar⁺ + e avec la quantité d'énergie associée ΔGᵢₒₙᵢₛₐₜᵢₒₙ = 1513 KJ/mol

L'énergie disponible dans un plasma de gaz diatomique (oxygène, azote, air, etc.) est donc très supérieure à celle de l'argon par exemple. En effet, la réaction d'ionisation de l'argon demande beaucoup moins d'énergie (1513 kJ/mol) que celle de dissociation + ionisation de l'oxygène (494 + 2*1308 = 3110 kJ/mol) ou de l'azote (962 + 2*1397 = 3756 kJ/mol).

Dans les applications de faible puissance utilisant des plasmas d'argon, il est connu d'ajouter une faible proportion de gaz diatomique (hydrogène, azote, oxygène ...) pour augmenter significativement les propriétés thermiques du plasma d'argon, tout en restant dans les possibilités de puissance du générateur et de résistance de la torche employée.

Tous les moyens actuellement mis en oeuvre consistent à augmenter l'efficacité thermique de la flamme plasma, soit par augmentation de la puissance du générateur qui alimente la torche, soit par augmentation de la taille de la torche (flamme plus large). Or le comportement hydrodynamique du plasma devient instable dans certaines conditions. En particulier il est difficile de stabiliser un plasma dans une torche de gros diamètre ce qui se traduit par une tendance à l'extinction. Ceci pose un problème puisqu'une torche de gros diamètre est indispensable à l'utilisation de fortes puissances électriques sans quoi, la proximité entre la torche et le plasma conduisent à la destruction de la torche.

La présente invention a pour but de proposer un procédé pour la recharge d'une préforme comprenant une torche à plasma inductif dans lequel la stabilité de la flamme plasma est améliorée.

L'objet de la présente invention est un procédé pour la recharge d'une préforme de fibre optique selon la revendication 1.

Par sa présence, l'argon n'apporte pas d'amélioration des propriétés thermiques comme expliqué précédemment, mais il apporte une amélioration des propriétés électriques du plasma qui sont une des causes de stabilité et d'efficacité de couplage électromagnétique. Il en ressort une plus grande concentration en électrons dans le gaz qui facilite le chauffage électromagnétique de l'ensemble du mélange gazeux, y compris du gaz plasmagène diatomique qui va apporter l'efficacité thermique du plasma

Il est donc possible d'envisager des diamètres de torche supérieurs à ceux actuellement utilisés, afin d'employer des générateurs de plus forte puissance. Ceci va dans le sens de vitesses de dépôt plus élevées tout en maintenant une qualité de fusion du verre acceptable.

La torche plasma selon l'invention a un diamètre compris entre 60mm et 200mm, et de préférence entre 60mm et 120mm. Sa puissance est comprise entre 50 et 200kW.

L'invention sera mieux comprise et d'autres avantages et particularités apparaîtront à la lecture de la description qui va suivre, donnée à titre non limitatif, accompagnée des dessins annexés parmi lesquels:
- la figure 1 est la représentation schématique d'une préforme en cours de fabrication à l'aide d'une installation selon l'invention,
- la figure 2 montre une vue schématique de l'installation de la figure 1 selon l'axe longitudinal de la préforme,
- la figure 3 est une vue en coupe d'une préforme après recharge selon l'invention.

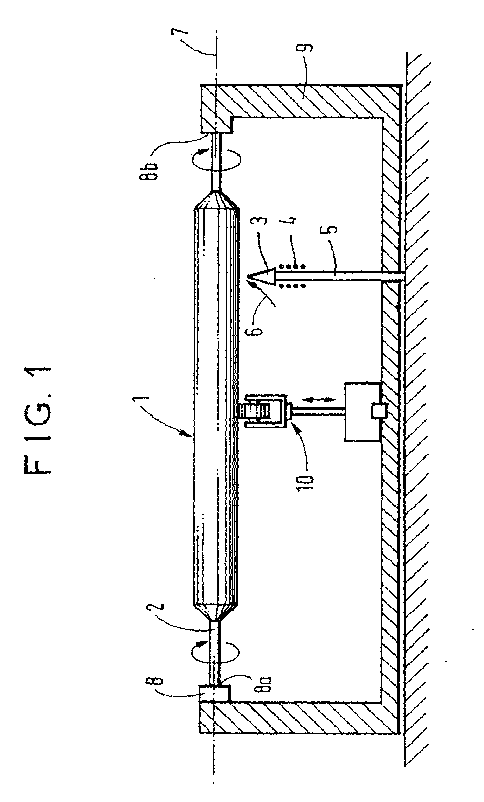

La figure 1 représente une installation pour la fabrication, notamment pour la recharge d'une préforme **1** primaire ayant une âme centrale support **2**. Cette installation comprend des moyens de chauffage par torche à plasma **3** à induction et des moyens d'apport de matière positionnés radialement par rapport à la préforme **1**. Les moyens d'apport de matière non représentés associés à la torche à plasma **3** sont classiquement utilisés pour injecter des grains de silice dans la flamme de la torche **3** qui en assure la fusion. On a simplement illustré une torche à plasma **3** et la bobine d'induction **4** qui lui est associée de manière connue, sans le générateur d'énergie électrique relié à cette bobine **4**. On a en outre représenté une conduite **5** débouchant dans le fond de la torche et servant à l'amenée d'un gaz plasmagène dans la torche. Dans le cas présent, le gaz plasmagène est de l'air, composé d'environ 80% en volume d'azote N₂ et de 20% en volume d'oxygène O₂, contenant 5% en volume d'argon. L'injection de grains de silice naturelle ou synthétique dans la flamme de la torche pour la recharge de la préforme **1** à partir de ces grains est schématisé par la flèche **6**. De préférence, ladite torche à plasma **3** est telle que la quasi-totalité de la surface extérieure de la préforme atteint une température supérieure à 2000°C en cours de traitement, de façon encore plus préférée supérieure à 2300°C. Cela correspond à un chauffage convectif de puissance d'induction généralement comprise entre 50 et 100kW, de préférence entre 70 et 100kW.

La recharge d'une préforme **1** primaire en vue d'obtenir une préforme exploitable pour la production d'une fibre, est réalisée par le dépôt, par passes successives, d'une suite de couches concentriques superposées. De façon connue, l'installation permet un mouvement relatif de translation longitudinal de la torche à plasma **3** et des moyens d'apport de matière dans un plan transversal à l'axe longitudinal **7** de la préforme **1**, de façon à ce que la quasi-totalité de la surface extérieure de la préforme **1** puisse être au moins une fois chauffée au cours du traitement. En outre la préforme **1** est en rotation sur elle-même selon son axe longitudinal **7**. L'installation comprend des moyens de rotation **8** d'axe de rotation horizontal **7** sur lesquels est montée l'âme support **2** de la préforme **1** à recharger. Il est envisageable que la torche soit déplacée en translation par rapport à la préforme, mais plus classiquement la préforme est montée sur un tour et celui-ci assure les déplacements en translation de la préforme, tenue par ses extrémités, par rapport à la torche alors fixée. Dans la forme de réalisation représentée sur la figure 1, les moyens de rotation **8** sont embarqués sur un châssis mobile **9** en translation parallèlement à l'axe de rotation **7**, la torche à plasma **3** et les moyens d'apport de matière étant fixes. La préforme **1** en cours de recharge est translatée en même temps que le châssis **9** auquel elle est attachée en deux points d'appui qui sont les points de montage **8a, 8b** de l'âme support **2** sur les moyens de rotation **8**. La recharge de la préforme comprend une pluralité de passes de la préforme **1** en regard de la torche à plasma **3** et des moyens d'apport de matière.

Cela permet avantageusement par un procédé automatisé de traiter la quasi-totalité de la surface extérieure de la préforme avec le meilleur rendement. Selon un tel mode de réalisation préféré, pour une préforme de diamètre compris entre 15mm et 200mm, la vitesse de déplacement relatif longitudinal du moyen de chauffage et de la préforme est compris entre 5 et 100 mm/mn et la préforme est en rotation sur elle-même selon son axe longitudinal avec une vitesse de rotation comprise entre 5 et 100 tours/mn.

De préférence, l'installation comporte en outre des moyens de soutien commandés **10** disposés entre les points de montage **8a, 8b** et constituant des points d'appui complémentaires de la préforme **1.** Ainsi, si l'on choisit judicieusement l'emplacement des moyens de soutien commandés **10,** on peut diminuer la flèche due à la masse de la préforme **1** en cours de fabrication ou en cours de recharge.

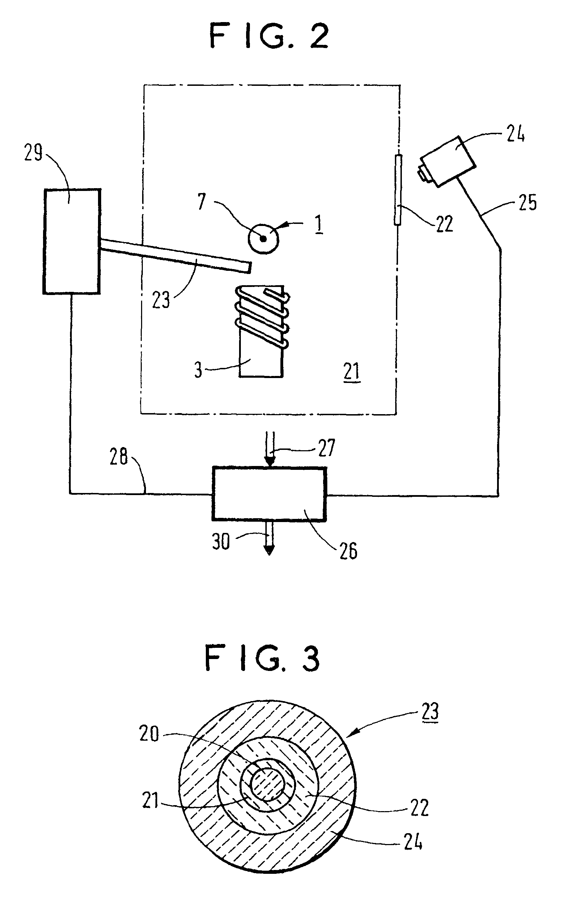

La figure 2 représente une vue dans une direction perpendiculaire à celle de la figure 1 de l'installation de recharge plasma dans laquelle peut être mise en oeuvre l'invention. Cette installation comprend, dans une enceinte **21**, pourvue d'une fenêtre transparente **22,** la préforme **1** primaire vue de bout, vers laquelle sont dirigés une torche à plasma **3** et des moyens d'alimentation b en grains de recharge. A l'extérieur de l'enceinte, une caméra **24** peut être disposée derrière la fenêtre **22** et pointée sur la préforme **1.** Elle fournit une mesure du diamètre de la préforme, à l'endroit où elle est pointée, sous la forme d'une valeur transmise par une liaison **25** à un dispositif de commande de processus de recharge **26.** Ce dernier reçoit, par une liaison multiple **27,** d'autres indications sur des conditions d'exécution du processus de recharge. Sous l'effet d'un programme interne de conduite de processus de recharge, le dispositif **26** fournit, sur une liaison de sortie **28**, une valeur de commande de débit de grains à un doseur de débit de grains **29** qui alimente en conséquence la buse **23.** Le dispositif **26** aussi, sur une liaison multiple de sortie **30**, d'autres valeurs de commande déterminant d'autres aspects de l'exécution du processus de commande. La recharge plasma s'opère par passes successives, de droite à gauche, puis de gauche à droite, au cours desquelles la torche à plasma **3** et la buse **23** balaient la longueur de la préforme **1**.

Ces dispositions d'une installation de dépôt externe par plasma de silice sur une ébauche ou autre, notamment sur une préforme primaire, sont en tant que telles connues, notamment du document EP- 0 440 130, et ne sont de ce fait que partiellement représentées. Elles permettent de délivrer les grains de silice dans la flamme et de projeter la silice fondue sur la préforme primaire montée rotative et mobile en translation devant la flamme, la silice déposée latéralement sur la préforme primaire se vitrifiant directement sur celle-ci.

La technique de recharge par plasma de silice pure ou dopée permet de réaliser directement la vitrification de la silice de recharge sur une préforme primaire. Elle a aussi l'avantage de pouvoir être mise en oeuvre sur une préforme réalisée par l'un des différents procédés connus, tels que notamment le procédé dit MCVD, acronyme de "Modified Chemical Vapor Deposition"ou sa variante FCVD, acronyme de "Furnace Chemical Vapor Deposition" utilisant un four à la place d'un chalumeau. Dans le cadre d'une fabrication d'une préforme primaire par technologie dite MCVD, on réalise un dépôt successif de couches de silice éventuellement dopée à l'intérieur d'un tube en silice, puis on procède au rétreint du tube ainsi intérieurement revêtu en un barreau qui est la préforme primaire. La technique de recharge permet donc de compléter en épaisseur la couche externe de la préforme primaire, le matériau de recharge par plasma étant alors également aussi proche que possible de celui de la couche externe de la préforme primaire. Elle permet aussi de réaliser la totalité de la gaine externe de la préforme finale issue de la recharge en partant d'une préforme primaire. Lors de la réalisation de la gaine externe, le matériau de recharge est choisi pour présenter un indice de réfraction différencié convenablement par rapport à celui de la gaine optique qu'il recouvre.

La préforme primaire **1** de fibre optique avant traitement de recharge est une préforme primaire issue d'un procédé MCVD, réalisée par dépôt interne de couches à base de silice éventuellement dopée formant un coeur optique **20** et une gaine optique **21** dans un tube **22,** suivi d'une transformation, par rétreint, du tube ainsi intérieurement revêtu en un barreau qui est la préforme primaire **1.** En se référant à la figure 3, on voit en coupe la préforme **23** après recharge selon l'invention, ou la fibre optique issue de cette préforme. La préforme **23** est constituée de la préforme primaire **1** et d'un revêtement optique formé d'au moins une couche **24** de silice pure. Elle résulte de la recharge par plasma réalisée selon l'invention, conduisant au dépôt de la couche **24** sur la préforme primaire **1.** Le coeur **20** et la gaine optique **21** sont en silice dopée convenablement. Ils présentent, l'un par rapport à l'autre et relativement au revêtement constitué par la couche **24** de silice, des indices de réfraction différenciés, ainsi qu'il est bien connu pour la réalisation de préforme de fibre optique.

## Revendications

1. Procédé pour la recharge d'une préforme de fibre optique comportant une préforme primaire vers laquelle sont dirigés une torche à plasma inductif obtenu par un gaz plasmagène et des apports de matière, le dit gaz plasmagène est de l'air et de l'argon dans une proportion volumique comprise entre 0,5 et 10%, **caractérisé en ce que** la puissance de la dite torche à plasma est comprise entre 50 et 200 kW.

2. Procédé selon la revendication 1, dans laquelle ladite torche à plasma a un diamètre compris entre 60mm et 200mm.

3. Procédé selon la revendication 2, dans laquelle ladite torche à plasma a un diamètre compris entre 60mm et 120mm.

4. Procédé selon de l'une des revendications 1-3 dans lequel ladite préforme primaire est issue d'un procédé MCVD ou FCVD.

## Claims

1. Process for the overcladding of an optical fibre preform comprising a primary preform towards which there are directed an induction plasma torch, the plasma being obtained from a plasma-forming gas, and introduced material, said plasma-forming gas being air and argon in a proportion by volume of between 0.5 and 10 % inclusive, **characterised in that** the power of said plasma torch is between 50 and 200 kW inclusive.

2. Process according to claim 1, wherein said plasma torch has a diameter between 60 mm and 200 mm inclusive.

3. Process according to claim 2, wherein said plasma torch has a diameter between 60 mm and 120 mm inclusive.

4. Process according to one of claims 1 to 3, wherein said primary preform is obtained in an MCVD or FCVD process.

## Patentansprüche

1. Verfahren zum Nachfüllen einer Vorform einer optischen Faser umfassend eine primäre Vorform, zu der ein induktiver Plasmabrenner gerichtet wird, erhalten durch ein plasmagenes Gas und Beibringungen von Materie, wobei das plasmagene Gas aus Luft und aus Argon in einem Volumenverhältnis enthalten zwischen 0,5 und 10 % ist, **dadurch gekennzeichnet, dass** die Leistung des Plasmabrenners zwischen 50 und 200 kW enthalten ist.

2. Verfahren nach Anspruch 1, bei welchem der Plasmabrenner einen Durchmesser enthalten zwischen 60 mm und 200 mm aufweist.

3. Verfahren nach Anspruch 2, bei welchem der Plasmabrenner einen Durchmesser enthalten zwischen 60 mm und 120 mm aufweist.

4. Verfahren nach einem der Ansprüche 1-3, bei welchem die primäre Vorform aus einem MCVD- oder FDVD-Prozess hervorgegangen ist.
